# EUROPEAN PATENT SPECIFICATION

(11) **EP 1 121 692 B1**
(45) Date of publication and mention of the grant of the patent: **07.12.2005**
(21) Application number: 99970778.9
(22) Date of filing: 14.10.1999
(51) Int. Cl.: H01B 7/08, B25J 18/06

(54) **CABLE SET INTENDED FOR MANIPULATORS**
KABELSATZ FÜR MANIPULATOREN
ELEMENT A CABLES MULTIPLE DESTINE A DES MANIPULATEURS

(30) Priority: 16.10.1998 SE 9803546
(43) Date of publication of application: 08.08.2001
(73) Proprietor: ABB AB, 721 83 Västeras (SE)
(72) Inventor: SALOMONSSON, Dan, S-722 19 Västeras (SE)
(74) Representative: Onn, Thorsten
(86) International application number: PCT/SE1999/001856
(87) International publication number: WO 2000/024009

(56) References cited:
- EP-A1- 0 734 030
- GB-A- 1 527 552
- PATENT ABSTRACTS OF JAPAN vol. 15, no. 102 (E-1043) & JP 02 309 512 A (HITACHI CABLE LTD) 25 December 1990

## Description

### TECHNICAL FIELD

The invention relates to a cable set according to the introduction to claim 1.

### PRIOR ART

Developments in manipulators/industrial robots are going towards ever more compact solutions with the aim to make the moving parts as light as possible. This in turn means that the space in, for example, the arms of the robot and similarly in the pivoted joints between these becomes tighter and tighter. This leads to problems with, for example, cable sets that supply power to the electrically operated equipment in the robots.

The aim is to have the cable set running in the manipulator/robot - the arms of the robot - which, however, leads to problems of building this in, especially in the pivoted joints between the arms of the robot. The separate cables that comprise many wires and that form the cable set are in principle made as a flat bunch of cables or as a strip of cables in one or more planes and extend between two straight connecting mechanisms for connecting the cable set between the moving parts of the manipulator. With regard to the small spaces that are available, the "flat" cable set must be connected between the arms of the robot with the connecting mechanism lying at right angles to the axis of the pivoted joint. This in turn causes problems that occur when, for example, the arms of the robot bend in relation to one another towards ever decreasing angles. As the cable set, due to its attachment, has to bend in its plane, the individual multi-wire cables will run between themselves in a more or less irregular manner, and get in the way of each other when moving, which leads to the risk that the lines jam against one another and to the risk of unsatisfactory wear.

### SUMMARY OF THE INVENTION

By the invention having the features stated in the characteristics section of claim 1, the problem of the movement of the multi-wired cables in the pivoted joints between the foot of the robot and the under arm or alternatively between two robot arm parts has been solved. The building in of the cable set between two moving parts of the robot also results in the function of the cable being more secure due to the smoother movements of the individual cables in the cable set and their even extension in the moving pivoted joint.

### DESCRIPTION OF THE DRAWINGS

The invention is described in more detail in the form of examples with reference to the drawings, where
FIG. 1 shows schematically a cable set consisting of four multi-wired cables spread out in one plane;
FIG. 2 shows the cable set according to FIG. 1 when it has been bent 90° in its own plane;
FIG. 3 shows the cable set according to the invention; and
FIG. 4 shows the cable set according to FIG. 3 bent 90° equivalent to FIG. 2.

### DESCRIPTION OF AN EXAMPLE OF AN EMBODIMENT

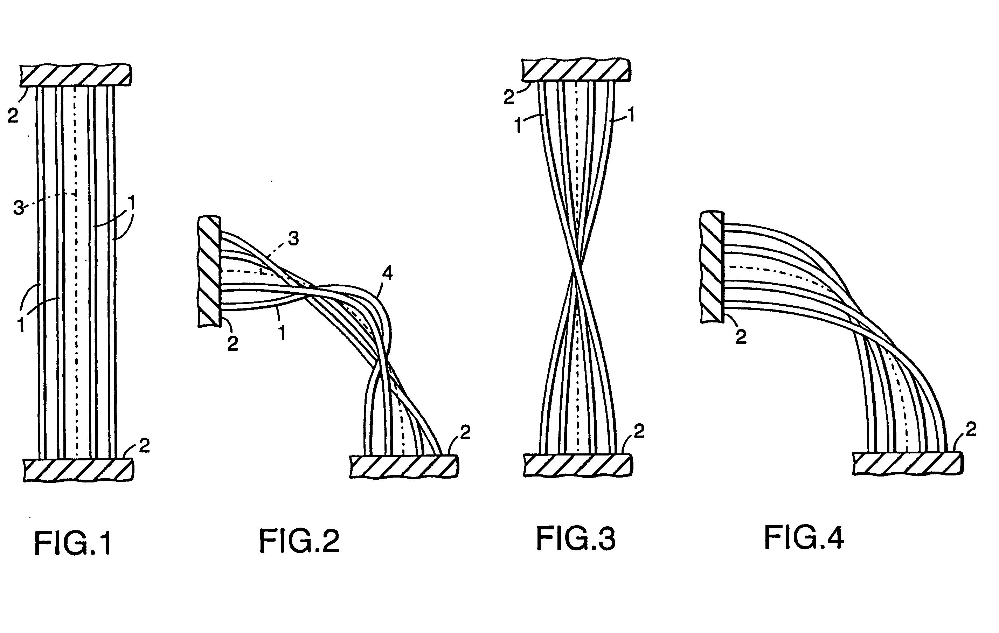

In the example, shown, the cable set consists of four multi-wired cables 1 lying freely beside one another in one plane. The cables 1 extend between and are connected along a straight line to, for example, a connecting mechanism that is well known within the technology and that is marked schematically with 2, which is in turn connected to two parts that can bend in relation to one another (not shown) of a manipulator, such as between the arms of a robot, for example. The angle of bending is assumed to extend at right angles to the plane of the drawing. In Fig. 2, the parts of the manipulator have been bent or turned in relation to one another 90° around the axis of the said bend, whereby because the cable set has been bent in its own plane, the individual cables take essentially different routes and hinder the movement of one another. During the bending movement, the outer cables will run in an arch 3 while the inner cables will be forced up through the other lines by means of a loop 4, as indicated in FIG. 2.

FIG. 3 shows a cable set according to FIG. 1 but that has, according to the invention, been turned 180° about its longitudinal axis before the connecting mechanism 2 has been connected to the parts of the manipulator (not shown) that move relative to one another. As the cable set has been turned about its longitudinal axis before it has been connected between the parts, a 90° bending of the parts relative to one another, as shown in FIG. 4, causes the individual cables to run with an even, arch-shaped curvature between their connecting mechanisms or connections with out hindering one another.

It should be realised that the invention applies to two parallel multi-wired cables or to more than the four cables shown in the figures. Similarly, it should be realised that the cable set can have parallel cables in more than one plane, still connected in a straight line to a connecting mechanism, without this encroaching on the concept of the invention.

## Claims

1. Cable set in the form of at least two separate multi-wired cables (1) intended for manipulators and extending between two parts of a manipulator that pivot in relation to one another around an axis **characterised in that** the cables (1) are accommodated in one part along an essentially first straight line extending essentially at right angles to the axis, **in that** the cables (1) are accommodated in the other part along an essentially second straight line that, in relation to the first line, when the cables (1) can be considered to be extended and lying parallel with one another, is turned essentially 180° or more so that at least the outer cables cross one another.

2. Cable set according to claim 1 **characterised in that** the multi-wired cables of the cable set are essentially connected in a straight line to a connecting mechanism (2) in one plane.

3. Cable set according to claim 1 **characterised in that** the multi-wired cables of the cable set are essentially connected in a straight line to a connecting mechanism in two or more planes.

## Patentansprüche

1. Kabelsatz in Form mindestens zweier separater mehradriger Kabel (1) zur Verwendung in Manipulatoren, wobei der Kabelsatz zwischen zwei gegenseitig um eine Achse verschwenkbaren Teilen eines Manipulators verläuft, **dadurch gekennzeichnet, dass** die Kabel (1) im einen Teil entlang einer ersten im wesentlichen geraden Linie verlaufen, welche im wesentlichen rechtwinklig zur Achse steht, dass die Kabel (1) im anderen Teil entlang einer zweiten im wesentlichen geraden Linie verlaufen, welche gegenüber der ersten Linie, wenn die Kabel (1) als gestreckt und parallel nebeneinander liegend betrachtet werden können, im wesentlichen um 180° oder weiter gedreht ist, so dass die äusseren Kabel einander kreuzen.

2. Kabelsatz nach Anspruch 1, **dadurch gekennzeichnet, dass** die mehradrigen Kabel des Kabelsatzes in einer Ebene im wesentlichen geradlinig an einem Verbindungsmechanismus (2) angeschlossen sind.

3. Kabelsatz nach Anspruch 1, **dadurch gekennzeichnet, dass** die Mehrleiterkabel des Kabelsatzes in zwei oder mehr Ebenen an einem Verbindungsmechanismus im wesentlichen geradlinig angeschlossen sind.

## Revendications

1. Ensemble de câbles en forme d'au moins deux câbles (1) individuels multifils, prévu pour des manipulateurs et s'étendant entre deux parties d'un manipulateur qui pivotent l'un par rapport à l'autre autour d'un axe, **caractérisé en ce que** les câbles (1) sont agencés dans l'une des parties le long d'une première ligne essentiellement droite s'étendant essentiellement perpendiculairement audit axe, **en ce que** les câbles (1) sont agencés dans l'autre partie le long d'une deuxième ligne essentiellement droite qui, lorsque les câbles (1) peuvent être considérés étendus et parallèles l'un à l'autre, est orientée essentiellement à 180° ou plus par rapport à la première ligne de sorte qu'au moins les câbles extérieurs se croisent.

2. Ensemble de câbles selon la revendication 1, **caractérisé en ce que** les câbles multifils sont connectés essentiellement en ligne droite à un mécanisme de connexion (2) dans un plan.

3. Ensemble de câbles selon la revendication 1, **caractérisé en ce que** les câbles multifils sont connectés essentiellement en ligne droite à un mécanisme de connexion dans deux plans ou plus.
